# EUROPÄISCHE PATENTSCHRIFT

(11) **EP 2 704 871 B1**
(45) Veröffentlichungstag und Bekanntmachung des Hinweises auf die Patenterteilung: **26.08.2015**
(21) Anmeldenummer: 12717597.4
(22) Anmeldetag: 07.04.2012
(51) Int. Cl.: B23K 23/00, C21C 5/46, F27D 3/15, B22D 41/44, B22D 43/00

(54) **REAKTIONSTIEGEL FÜR ALUMINOTHERMISCHE SCHWEISSUNGEN MIT EINEM FEUERFESTEN SPERRKÖRPER**
REACTION CRUCIBLE FOR ALUMINOTHERMIC WELDING OPERATIONS, HAVING A REFRACTORY SHUTOFF ELEMENT
CREUSET DE REACTION POUR DES SOUDURES ALUMINOTHERMIQUES EQUIPE D'UN CORPS D'ARRET REFRACTAIRE

(30) Priorität: 02.05.2011 DE 202011100121 U
(43) Veröffentlichungstag der Anmeldung: 12.03.2014
(73) Patentinhaber: Elektro-Thermit GmbH & Co. KG, 06132 Halle (DE)
(72) Erfinder: HANTUSCH, Jan, 04416 Markkleeberg (DE); ANGENENDT, Werner, 06114 Halle/Saale (DE)
(74) Vertreter: Sobisch, Peter
(86) Internationale Anmeldenummer: PCT/EP2012/001542
(87) Internationale Veröffentlichungsnummer: WO 2012/149993

(56) Entgegenhaltungen:
- DE-B1- 1 508 223
- FR-A3- 2 785 373
- GB-A- 2 188 132
- US-A- 3 831 915
- US-A- 4 854 550

## Beschreibung

Die Erfindung bezieht sich auf einen Reaktionstiegel entsprechend dem Oberbegriff des Anspruchs 1.

Bei der in feuerfesten, auf Gießformen aufgesetzten Reaktionstiegeln durchgeführten, beispielsweise für Schweißarbeiten im verlegten Gleis benutzten aluminothermischen Reaktion fallen als Reaktionsprodukte schmelzflüssiger Stahl und eine nach Abschluss der Reaktion auf der Stahlschmelze aufschwimmende Schlacke an. Eine Öffnung der Ausflussöffnung des Reaktionstiegels soll erst vorgenommen werden, nachdem die durch anfänglich turbulente Strömungsverhältnisse gekennzeichnete Reaktion zu einem Abschluss gekommen ist und sich eine Trennung von Schlacke und Schmelze ausgebildet hat. Mit Hinblick auf die Gewinnung einer Schmelze, die stofflich homogen und frei von Schlackenanteilen ist, sind Maßnahmen zur Zurückhaltung bzw. Entfernung der Schlacke erforderlich, da sich ansonsten durch Schlackeneinschlüsse bedingte Schweißfehler ergeben können.

Es ist allgemein bekannt, die Reaktionstiegel in Verbindung mit Schlackenschalen einzusetzen, die nach Art eines an der Gießform angebrachten Überlaufs zur Aufnahme eines großen Teiles der anfallenden Schlacke eingerichtet sind. Eine vollständige Entfernung der angefallenen Schlacke ist auf diesem Wege jedoch nicht möglich, so dass es nicht zuverlässig verhindert werden kann, dass zusammen mit der ausströmenden Stahlschmelze geringe Mengen an Schlacke mitgeführt werden.

Die mit den Gießformen in Verbindung stehenden Schlackenschalen müssen bei dieser Arbeitsweise mitgeführt werden, ein Umstand, der bei Gleisarbeiten als störend empfunden wird, da er die Masse der mitzuführenden Geräte und Stoffe erhöht.

Aus dem Dokument DE 2 316 757 ist es bekannt, zum Verhindern eines Nachlaufens von Schlacke aus einer Gießpfanne deren bodenseitige, in einen Ausgussstein eingeformte Ausflussöffnung mit einem Flüssigkeitsverschluss zu versehen, durch welche ein Rest an schmelzflüssigem Stahl ein Austreten der auf diesem aufschwimmenden Schlacke verhindert. Der Flüssigkeitsverschluss wird durch eine in den Boden der Gießpfanne eingeformte, die Ausflussöffnung konzentrisch umgebende Ausnehmung gebildet, in die sich von oben eine ringförmige, zum Unterströmen bestimmte Rückhaltestruktur hinein erstreckt, so dass in der Ausnehmung restliche Schmelze eine Sperre für ein Nachströmen von Schlackenanteilen bildet. Die Giesspfanne ist im Übrigen mit einem, mittels einer äußeren Betätigungsvorrichtung zwischen einer die Ausflussöffnung sperrenden oder diese freigebenden feuerfesten Stopfen versehen.

Ein ebenfalls mit einem eine Ausgießöffnung während eines Abstiches zur Zurückhaltung austretender Schlacke teilweise verschließender Stopfen ausgerüsteter Konverter ist aus dem Dokument US 4 995 594 bekannt.

Der aus der US 4 854 550 bekannte Konverter ist zur Verhinderung eines Austretens von Schlacke während eines Abstichs mit einem kugelförmigen, in der Schmelze, jedoch nicht in der Schlacke schwimmfähigen Sperrkörper versehen, der dazu bestimmt ist, während eines, mit einer Schwenkung des Konverters um eine horizontale Achse verbundenen Abstichs eine seitliche Ausflussöffnung schließlich zu schließen und auf der Schmelze aufschwimmende Schlacke zurück zu halten. Im unverschwenkten Zustand des Konverters befindet sich die Ausflussöffnung oberhalb der Schmelze. Der Sperrkörper besteht aus zwei mittels eines feuerfesten Klebstoffs verklebten, aus einem feuerfesten Material bestehenden Halbkugeln, welche einen zur Aufnahme eines metallischen Füllkörpers bestimmten Hohlraum umschließen. Die Dichte und die Größe dieses Füllkörpers sind dahingehend gewählt, dass in Abhängigkeit von den Eigenschaften der Schmelze innerhalb des Konverters ein Aufschwimmen des Sperrkörpers lediglich in der Schmelze dargestellt ist.

Aus dem Dokument DE 31 26 559 ist ein weiterer Konverter bekannt, der zur Verhinderung eines Austretens von Schlacke während des Abstechens mit einem länglichen, in diesen eintauchenden, zwischen einer, eine Ausflussöffnung sperrenden und einer diese freigebenden Stellung mittels einer besonderen Betätigungseinrichtung bewegbaren, aus einem feuerfesten Werkstoff ausgebildeten Absperrelement bekannt, welches gegen Ende des Gießvorgangs zur Ausübung einer Rückhaltefunktion auf aufschwimmende Schlackenanteile bestimmt ist. Aus diesem Dokument ist es zur Anwendung bei Konvertern ferner bekannt, sogenannte feuerfeste Schlackenkugeln auf die innenseitige Öffnung eines Abstichloches zu werfen. Dies soll sich jedoch nicht bewährt haben, da eine Selbstsetzung der Kugel auf dem Abstichloch nicht mit einer hinreichenden Sicherheit erreicht werden konnte.

Ebenfalls zur Anwendung bei Konvertern bestimmt ist eine aus dem Dokument DE 1 508 223 bekannte, für ein Zurückhalten der Schlacke während eines Abstiches bestimmte Vorrichtung. Diese wird durch einen Schwimmkörper gebildet, dessen Dichte das 1,1- bis 1,8 fache der Dichte der Schlacke, jedoch geringer als die Dichte der Stahlschmelze bemessen ist. Der Schwimmkörper ist mit einer zum Einführen in eine Ausflussöffnung des Konverters bestimmten Führungsstange und einer an einer Halteeinrichtung lösbar befestigten Haltestange versehen, wodurch auf den Schwimmkörper nach Maßgabe des Fallens des Pegels der Stahlschmelze während eines Ausgießens eine Führungsfunktion auf den Schwimmkörper ausgeübt werden soll, um diesen in Richtung auf die Ausflussöffnung hin zu führen, hierbei einen Schlackenanteil zurückhaltend. Dieser einen Schwimmkörper umfassende Verschlussmechanismus soll während eines Abstiches in den Konverter eingeführt werden.

Ein anderer Konverter ist aus der GB 2 188 132 bekannt, bei dem oberhalb einer Ausflussöffnung ein Sperrkörper in der metallischen Schmelze, jedoch nicht in der Schlacke schwimmfähig ist. Seine Dichte ist unter Berücksichtigung dieser Zweckbestimmung eingestellt. Der Sperrkörper ist mit einer Führungsstange ausgerüstet, die diesen in Richtung auf die Ausflussöffnung mit führt, wobei alternativ anhand der durch den Sperrkörper ausgelösten Badbewegung der Schmelze während des Ausströmens erkennbar sein soll, dass die Schlacke sich der Ausflussöffnung genähert hat und die Ausflussöffnung nunmehr zu schließen ist.

Regelmäßig sind nach diesem Stand der Technik somit bei Konvertern, Gießpfannen und dergleichen bei bodenseitiger Anordnung von Ausflussöffnungen besondere Maßnahmen zur sicheren Führung der Sperrkörper in Richtung auf die Ausflussöffnung erforderlich, um die Rückhaltefunktion für die Schlacke sicher zu erfüllen.

Aus der FR 2 785 373 A3, basis für den Oberbegriff des Anspruchs 1, ist ein zur Verwendung bei aluminothermischen Schienenschweißungen bestimmter, bodenseitig eben ausgebildeter und mittig mit einer zur Unterseite hin leicht konisch geformten, durch einen Tiegelstöpsel verschließbaren Ausflussöffnung versehener Reaktionstiegel bekannt. Der Tiegelstöpsel besteht aus einem aus Graphit oder Aluminium ausgebildeten, oberseitig offenen Hülsenkörper, auf dessen Boden ein oder mehrere, aus beispielsweise fasrigen keramischen Stoffen bestehende Plättchen aufgelagert sind. Durch die Bemessung der Dicke und / oder der Anzahl der Plättchen in Verbindung mit deren werkstofflicher Beschaffenheit ist ein Durchschmelzverhalten des Tiegelstöpsels dargestellt, welches unter Anpassung an den zeitlichen Ablauf der aluminothermischen Reaktion zu Öffnungsbzw. Abstichzeiten führt, die auf die Ausbildung eines bestimmten Zwischengussgefüges zwischen den zu verschweißenden Schienenenden gerichtet sind. Eine Rückhaltefunktion für Schlacke ist bei diesem bekannten Reaktionstiegel nicht eingerichtet.

Ein weiterer zur Anwendung ebenfalls bei aluminothermischen Schienenschweißungen bestimmter Reaktionstiegel ist aus der US 3 831 915 bekannt. Dieser weist einen sich in Richtung auf eine Ausflussöffnung hin gleichförmig vermindernden Querschnittsverlauf auf, wobei die Ausflussöffnung durch einen nagelförmigen Abstichstift verschlossen ist, auf dem sich als Abdichtmittel ein Plättchen aus anorganischen Fasern befindet, welches von einer Schicht aus Sand überlagert ist. Auch bei diesem Reaktionstiegel ist keine Rückhaltefunktion für Schlacke eingerichtet.

Es ist vor diesem Hintergrund die Aufgabe der Erfindung, einen Reaktionstiegel der eingangs bezeichneten Art in einfacher Weise mit Hinblick auf eine zuverlässige Zurückhaltung der während der aluminothermischen Reaktion gebildeten Schlacke auszugestalten. Gelöst ist diese Aufgabe bei einem solchen Reaktionstiegel durch die Merkmale des Kennzeichnungsteils des Anspruchs 1.

Erfindungswesentlich ist hiernach ein feuerfester Sperrkörper, der von seiner Dichte her dahingehend eingerichtet ist, dass er in dem schmelzflüssigen Stahl schwimmfähig ist, nicht hingegen in der Schlacke. Die globale Dichteeinstellung kann hierbei durch Wahl eines bestimmten Stoffes oder durch strukturelle Maßnahmen erreicht werden. Wesentlich ist ferner, dass ein solcher Sperrkörper bereits der aluminothermischen Mischung beigegeben ist. Aufgrund seiner Schwimmfähigkeit in der Stahlschmelze behindert er das Ausströmen des Stahles nicht, sondern tritt erst dann in Funktion, wenn der Stahl zumindest im wesentlichen aus dem Tiegel ausgetreten Und in eine Gießform eingeführt worden ist, auf die er zur Durchführung einer aluminothermischen Schweißung gesetzt worden ist. Der Sperrkörper ist in dieser Phase dazu bestimmt, auf der Ausströmöffnung des Reaktionstiegels aufzusetzen und die gebildeten Schlackenanteile in dem Reaktionstiegel zurückzuhalten. Der mit einer derartigen aluminothermischen einen Sperrkörper beinhaltenden Mischung ausgerüstete Reaktionstiegel ermöglicht einen faktisch automatischen Arbeitsablauf beginnend mit der Zündung des aluminothermischen Gemisches und endend mit dem Eingießen des Stahles in die Gießform, wobei aufgrund der zuverlässigen Zurückhaltung von Schlackeanteilen innerhalb des Reaktionstiegels ein Entstehen von Schweißfehlern infolge von Schlackeneinschlüssen im Schweißgut zuverlässig unterbunden ist.

Nachdem Schlackenanteile in dem Reaktionstiegel zurückgehalten werden, erübrigen sich Maßnahmen im Bereich der Gießform, die auf ein Trennen sowie Aufnehmen von Schlackeanteilen gerichtet sind, wie z. B. die an dieser Stelle gebräuchlichen Schlackeschalen. Dies wiederum ermöglicht die Verwendung von masseärmeren Gießformen, ein Umstand, der bei Arbeiten im verlegten Gleis von besonderem Vorteil ist.

Der Reaktionstiegel weist eine rotationssymmetrische Gestalt auf sowie einen Boden, dessen innere Oberfläche eine in Richtung auf eine zentral angeordnete Ausflussöffnung hin trichterartig abfallende Gestalt aufweist. Dies bietet den Vorteil, dass der während des Ausgießens innerhalb des Reaktionstiegels schwimmende Sperrkörper, nachdem er schließlich auf dem Boden aufliegt, durch dessen abfallenden Verlauf eine Führungswirkung in Richtung auf die Ausflussöffnung hin erfährt. Auf diese Weise ist sichergestellt, dass der Sperrkörper schließlich auf der Eintrittsöffnung der Ausströmöffnung aufsitzt, hierbei eine Rückhaltefunktion auf die noch innerhalb des Reaktionstiegels befindlichen Schlackenanteile ausübend.

Der Sperrkörper muss ferner eine Gestalt aufweisen, deren Durchmesser größer ist als derjenige der Ausströmöffnung ist. Er weist bei einem rotationssymmetrischen Reaktionstiegel ebenfalls eine rotationssymmetrische Gestalt auf.

Die Merkmale der Ansprüche 2 bis 5 sind auf unterschiedliche Formen eines Sperrkörpers gerichtet, der in der Form einer Kugel oder eines Kegels vorliegt und der dazu geeignet sein muss, innerhalb der Stahlschmelze zu schwimmen, nicht hingegen in der Schlacke. Dies bedeutet, dass er stofflich und / oder strukturell so beschaffen sein muss, dass er in der Stahlschmelze schwimmend teilweise aus der Phasengrenze zwischen der Stahlschmelze und der Schlacke herausragt. Um einen positiven Auftrieb in diesem Sinne darzustellen, kann der Sperrkörper aus einer feuerfesten Hülle bestehen, deren Füllung nach Maßgabe der global darzustellenden Dichte entweder ein metallischer Vollkörper oder ein metallisches Granulat ist.

Die Erfindung wird im Folgenden unter Bezugnahme auf die in den Zeichnungen schematisch wiedergegebenen Ausführungsbeispiele näher erläutert werden. Es zeigen:
- Fig. 1: einen erfindungsgemäß ausgerüsteten Reaktionstiegel vor dem Öffnen einer Ausflussöffnung;
- Fig. 2: den Reaktionstiegel gemäß Fig. 1 nach erfolgtem Öffnen der Ausflussöffnüng;
- Fig. 3: eine Zusammenstellung unterschiedlicher Ausführungsformen eines Sperrkörpers.

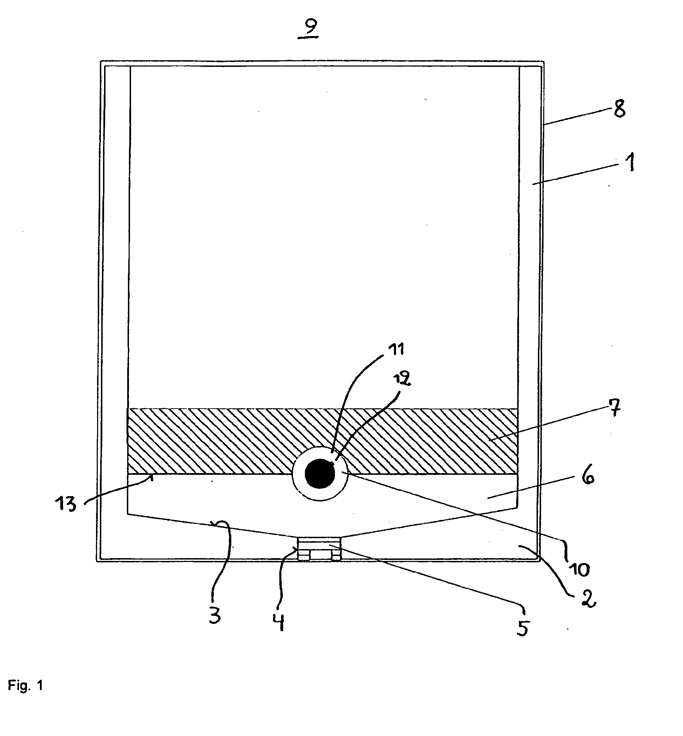

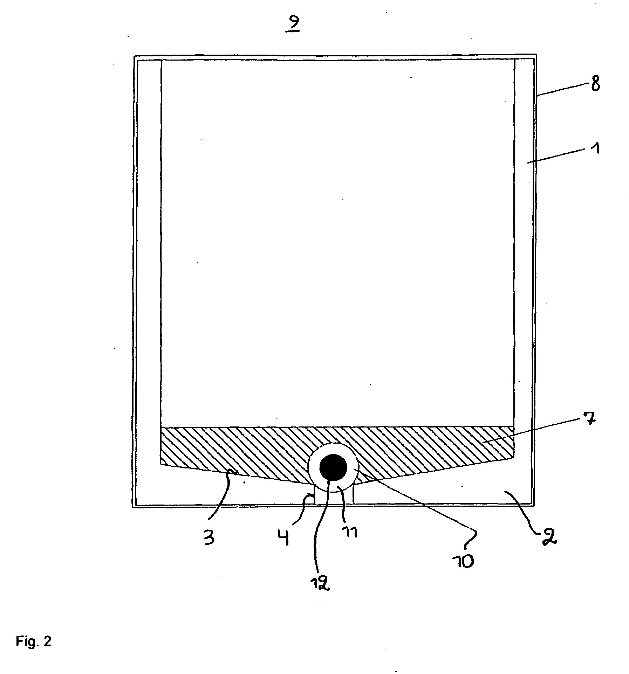

Mit 1 ist in den Figuren 1 und 2 ein aus einem feuerfesten Werkstoff hergestellter Reaktionstiegel bezeichnet, der beispielsweise als zylindrisches Gefäß ausgebildet ist und einen Boden 2 aufweist, der, gemäß der erfindung, innenseitig eine trichterartig in Richtung auf einen zentrale Ausflussöffnung 4 hin geneigt geformte Oberfläche 3 aufweist.

In die Ausflussöffnung 4 ist ein an sich bekannte Tiegelstöpsel 5 eingesetzt, der als eine unter den Bedingungen einer aluminothermischen Reaktion innerhalb des Reaktionstiegels durchschmelzbare, somit nach Ablauf eines definierten Zeitintervalls die Ausflussöffnung freigebende Struktur ausgebildet ist. Dieses Zeitintervall, während welchem der Tiegelstöpsel 5 seine Sperrfunktion innerhalb der Ausflussöffnung 4 erfüllen soll, ist so bemessen, dass innerhalb dieses Intervalls die aluminothermische Reaktion abgeschlossen und sich eine Trennung der Reaktionsprodukte in einen schmelzflüssigen Stahl 6 und eine auf diesem aufschwimmende Schlacke 7 gegeben ist.

Der Reaktionstiegel 1 kann in eine Tiegelhülle 8 eingebunden sein, welche gleichzeitig den Verschluss für die Oberseite 9 bildet.

Mit 10 ist ein kugelförmiger Sperrkörper bezeichnet, dessen Dicht größer ist als diejenige der Schlacke 7, jedoch kleiner als diejenige des Stahls 6 bemessen ist. Der Sperrkörper besteht aus einer feuerfesten Hülle 11 und einer Füllung 12, wobei die Hülle 11 sowie die Füllung 12 stofflich und / oder von ihren Dimensionen her mit der Maßgabe bemessen sind, dass ein teilweises Aufschwimmen in der Stahlschmelze darstellbar ist.

Der erfindungsgemäß ausgerüstete Reaktionstiegel 1 enthält im Ausgangszustand eine aluminothermische, als feinkörniges Granulat vorliegende Mischung, der ein Sperrkörper 10 beigefügt ist. Er ist somit in besonders einfacher Weise für eine selbsttätig wirksame Zurückhaltung von Schlackenanteilen ausgerüstet und dient gleichzeitig als Transportbehältnis für die genannte Mischung.

Nach Zündung der Mischung bzw. Einleiten der aluminothermischen Reaktion kommt es innerhalb des Tiegels zur Ausbildung zweier nicht miteinander mischbarer Phasen, nämlich schmelzflüssigem Stahl einerseits und Schlacke andererseits, welche nach Beruhigung eines anfangs turbulenten Strömungsfeldes eine Phasengrenze 13 bilden, aus der der Sperrkörper 10 aufgrund seiner Dichte im Verhältnis zu der Stahlschmelze teilweise herausragt.

Nach Ablauf des eingangs genannten Zeitintervalls ist der Tiegelstöpsel 5 durchgeschmolzen, so dass die Ausflussöffnung 4 freigegeben ist und der Stahl in Richtung auf eine zeichnerisch nicht dargestellte Gießform ausströmen kann, die bei einer aluminothermischen Schweißung zwei miteinander zu verbindende Schienenenden umgibt und auf welche der Reaktionstiegel 1 gesetzt ist. Da der Sperrkörper 10 auf der Stahlschmelze schwimmt, behindert er deren Austreten aus der Ausflussöffnung 4 nicht.

In der Folge sinkt die Phasengrenze 13 in Richtung auf den Boden 2 ab, so dass der Sperrkörper 10, unterstützt durch den in Richtung auf die Ausflussöffnung 4 hin schräg abfallenden Verlauf der Oberfläche 3 schließlich auf den Eintrittsquerschnitt der Ausflussöffnung 4 gelangt, diesen sperrend, so dass ein Austritt von Schlacke 7 jedenfalls verhindert wird. Der Sperrkörper 10 ist zu diesem Zweck in Abhängigkeit von den Abmessungen der Ausflussöffnung 4 dahingehend dimensioniert, dass sein Durchmesser etwas größer bemessen ist als derjenige der Austrittsöffnung 4, so dass diese durch den aufliegenden Sperrkörper 11 zuverlässig geschlossen wird.

Der Reaktionstiegel 1 kann anschließend nach Erstarren der Schlacke zu deren Abtransport bzw. Entsorgung benutzt werden.

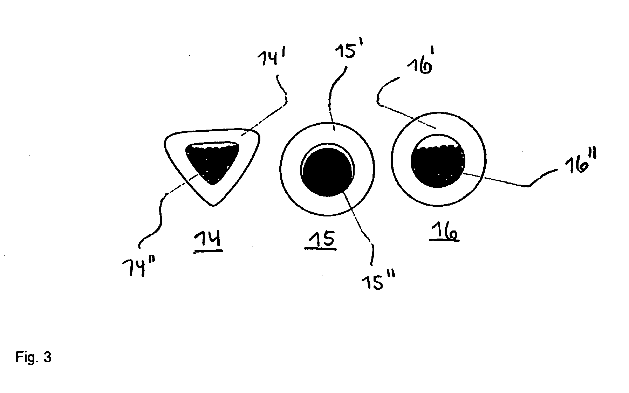

In den Figuren 1 und 2 kommt ein kugelförmiger Sperrkörper 10 zum Einsatz. Die Form des Sperrkörpers ist aus praktischen Gründen vorteilhaft, insbesondere mit Hinblick auf ein sicheres Verschleißen der Ausflussöffnung 4. Gemäß Fig. 3 kommen jedoch auch andere Formen des Sperrkörpers in Betracht.

Mit 14 ist ein kreiskegelförmiger Sperrkörper bezeichnet. Dieser nimmt schwimmend eine Orientierung derart an, dass die Grundfläche dieses Kegels der Oberseite 9 zugekehrt ist, so dass auch in diesem Fall ein zuverlässiges Verschließen der Ausflussöffnung 4 gesichert ist.

Mit 15, 16 sind weitere Formen von Sperrkörpern dargestellt, die kugelförmig ausgebildet sind.

Sämtliche Sperrkörper 14 bis 16 weisen eine aus einem feuerfesten Werkstoff bestehende Hülle 14', 15' und 16' auf. Die Füllungen 14" und 16" der Sperrkörper 14, 16 bestehen jedoch aus einem vorzugsweise metallischen Granulat, wohingegen die Füllung 15" des Sperrkörpers 15 aus einem vorzugsweise metallischen Massivkörper besteht.

Wesentlich für die Gestalt der Sperrkörper 10 und 14 bis 16 ist, dass es, gemäß der Erfindung, sich um rotationssymmetrische Körper handelt, nachdem die Ausflussöffnung 4 im Regelfall einen Kreisquerschnitt aufweist.

Man erkennt anhand der vorstehenden Ausführungen, dass ein Reaktionstiegel 1, der mit einem erfindungsgemäßen, der aluminothermischen Mischung beigefügten Sperrkörper ausgerüstet ist, ein bequemes Arbeiten ermöglicht, da in einfacher und zuverlässiger Weise ein Einbringen von Schlackenanteilen in das aluminothermisch generierte Zwischengussgefüge verhindert und ein Beitrag zu reproduzierbaren Arbeitsergebnissen geleistet wird.

Die Erfindung ist bei Reaktionstiegeln anwendbar, die für eine einmalige Benutzung bestimmt sind. Sie ist jedoch auch bei sonstigen Reaktionstiegeln vorteilhaft einsetzbar.

Ein zur Längsachse des Reaktionstiegels rotationssymmetrischer Boden 2 mit einer zentralen Ausflussöffnung 4 ist von Vorteil bei der Darstellung einer Führungswirkung auf den Sperrkörper 10, um eine einwandfreie Sperrung der Ausflussöffnung 4 zu erreichen. Andere, dem Fachmann geläufige, zur Darstellung einer insbesondere schwerkraftbedingten Führungswirkung auf den Sperrkörper, nämlich in Richtung auf eine Ausflussöffnung hin geeignete Ausführungsformen kommen jedoch ebenfalls in Betracht.

### Bezugszeichenliste:

1. Reaktionstiegel
2. Boden
3. Oberfläche
4. Ausflussöffnung
5. Tiegelstöpsel
6. Stahl
7. Schlacke
8. Tiegelhülle
9. Oberseite
10. Sperrkörper
11. Hülle
12. Füllung
13. Phasengrenze
14. Sperrkörper
14'. Hülle
14". Füllung
15. Sperrkörper
15'. Hülle
15". Füllung
16. Sperrkörper
16'. Hülle
16". Füllung

## Patentansprüche

1. Reaktionstiegel (1) zur Durchführung aluminothermischer Schweißungen, mit einem Boden (2), in dessen Ausflussöffnung (4) ein als eine unter den Bedingungen einer aluminothermischen Reaktion innerhalb des Reaktionstiegels (1) durchschmelzbare, nach Ablauf eines definierten Zeitintervalls die Ausflussöffnung (4) freigebende Struktur ausgebildeter Tiegelstöpsel (5) eingesetzt ist, und mit einer in dem Reaktionstiegel (1) aufgenommenen feinkörnigen aluminothermischen Mischung, **gekennzeichnet durch** einen zum Zurückhalten der als ein Reaktionsprodukt der aluminothermischen Reaktion gebildeten Schlacke (7) in dem Reaktionstiegel (1) bestimmten feuerfesten Sperrkörper (10, 14, 15, 16), dessen Dichte größer als diejenige der Schlacke (7) und kleiner als diejenige des als Reaktionsprodukt der aluminothermischen Reaktion gebildeten schmelzflüssigen Stahls (6) ist, wobei der Sperrkörper (10, 14, 15, 16) in die aluminothermische Mischung einbezogen ist, wobei der Boden (2) eine innenseitig trichterartig in Richtung auf die zentral angeordnete Ausflussöffnung (4) hin geneigt geformte Oberfläche (3) aufweist sowie zur Längsachse des Reaktionstiegels (1) rotationssymmetrisch ausgebildet ist und wobei der Sperrkörper (10, 14, 15,16) eine rotationssymmetrische Gestalt aufweist, deren Durchmesser größer als derjenige der Ausflussöffnung (4) bemessen ist.

2. Reaktionstiegel (1) nach Anspruch 1, **dadurch gekennzeichnet, dass** der Sperrkörper (10, 14, 15, 16) eine Hülle (11, 14', 15', 16') aus einem feuerfesten Werkstoff aufweist.

3. Reaktionstiegel (1) nach Anspruch 1 oder 2, **dadurch gekennzeichnet, dass** der Sperrkörper (10, 14, 15, 16) eine kugel- oder eine kegelförmige Gestalt aufweist.

4. Reaktionstiegel (1) nach einem der Ansprüche 1 bis 3, **dadurch gekennzeichnet, dass** der Sperrkörper (10, 15) eine Füllung (12, 15") bestehend aus einem metallischen Vollkörper aufweist.

5. Reaktionstiegel (1) nach einem der Ansprüche 1 bis 3, **dadurch gekennzeichnet, dass** der Sperrkörper (14, 16) eine Füllung (14", 16") bestehend aus einem metallischen Granulat aufweist.

## Claims

1. A reaction crucible (1) for carrying out aluminothermic welding operations, having a bottom (2), in the outflow opening (4) of which is inserted a crucible plug (5) designed as a structure that melts inside the reaction crucible (1) with under the conditions of an aluminothermic reaction, leaving the outflow opening (4) unobstructed after a defined period, and having a fine-grained aluminothermic mixture accommodated in the reaction crucible (1),
**characterized by** a refractory shutoff element (10, 14, 15, 16) designed to retain the slag (7) that is formed as a reaction product of an aluminothermic reaction in the reaction crucible (1), and which has a density greater than that of the slag (7) and less than that of the molten steel (6) formed as a reaction product of the aluminothermic reaction, wherein the shutoff element (10, 14, 15, 16) is included in the aluminothermic mixture, wherein the bottom (2) comprises an inner surface (3) that slopes in the manner of a funnel towards the outflow opening (4) and is rotationally symmetrical about the longitudinal axis of the reaction crucible (1), and wherein the shutoff element (10, 14, 15, 16) has a rotationally symmetrical shape, the diameter of which is dimensioned larger than that of the outflow opening (4).

2. The reaction crucible (1) according to claim 1, **characterized in that** the shutoff element (10, 14, 15, 16) comprises a shell (11, 14', 15', 16') made of a refractory material.

3. The reaction crucible (1) according to claim 1 or 2, **characterized in that** the shutoff element (10, 14, 15, 16) has a spherical or conical shape.

4. The reaction crucible (1) according to any of claims 1 to 3, **characterized in that** the shutoff element (10, 15) has a filling (12, 15") consisting of a solid metal body.

5. The reaction crucible (1) according to any of claims 1 to 3, **characterized in that** the shutoff element (14, 16) has a filling (14", 16") consisting of a metal granulate.

## Revendications

1. Creuset de réaction (1) servant à réaliser des soudures aluminothermiques, comprenant un fond (2), dans l'ouverture de flux sortant (4) duquel un bouchon de creuset est inséré (5), réalisé sous la forme d'une structure pouvant fondre dans les conditions d'une réaction aluminothermique à l'intérieur du creuset (1), dégageant l'ouverture de flux sortant (4) à l'issue d'un laps de temps défini, et comprenant un mélange aluminothermique à grains fins reçu dans le creuset de réaction (1), **caractérisé par** un corps de blocage (10, 14, 15, 16) réfractaire destiné à retenir dans le creuset de réaction (1) les scories (7) obtenues sous la forme d'un produit de réaction de la réaction aluminothermique, la densité dudit corps de blocage étant plus importante que celle des scories (7) et inférieure à celle de l'acier (6) fondu obtenu sous la forme d'un produit de réaction de la réaction aluminothermique, sachant que le corps de blocage (10, 14, 15, 16) est intégré dans le mélange aluminothermique, sachant que le fond (2) présente une surface (3) formée de manière inclinée côté intérieur à la manière d'un entonnoir en direction de l'ouverture de flux sortant (4) disposée de manière centrée et qu'il est réalisé de manière symétrique en rotation par rapport à l'axe longitudinal du creuset de réaction (1) et sachant que le corps de blocage (10, 14, 15, 16) présente une forme symétrique en rotation, les dimensions du diamètre de laquelle étant plus grandes que celles de l'ouverture de flux sortant (4).

2. Creuset de réaction (1) selon la revendication 1, **caractérisé en ce que** le corps de blocage (10, 14, 15, 16) présente une enveloppe (11, 14', 15', 16') composée d'un matériau réfractaire.

3. Creuset de réaction (1) selon la revendication 1 ou 2, **caractérisé en ce que** le corps de blocage (10, 14, 15, 16) présente une forme sphérique ou conique.

4. Creuset de réaction (1) selon l'une quelconque des revendications 1 à 3, **caractérisé en ce que** le corps de blocage (10, 15) présente une masse de remplissage (12, 15'') constituée d'un corps en métal massif.

5. Creuset de réaction (1) selon l'une quelconque des revendications 1 à 3, **caractérisé en ce que** le corps de blocage (14, 16) présente une masse de remplissage (14'', 16'') constituée de granulés métalliques.
